(19) Europäisches Patentamt / European Patent Office / Office européen des brevets

(11) **EP 4 134 881 A1**

(12) **EUROPEAN PATENT APPLICATION**
published in accordance with Art. 153(4) EPC

(43) Date of publication:
**15.02.2023 Bulletin 2023/07**

(21) Application number: **20930308.0**

(22) Date of filing: **10.04.2020**

(51) International Patent Classification (IPC):
**G06N 20/00** (2019.01)

(52) Cooperative Patent Classification (CPC):
**G06N 20/00**

(86) International application number:
**PCT/JP2020/016212**

(87) International publication number:
**WO 2021/205669 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **KAMATA, Yuichi**
  **Kawasaki-shi, Kanagawa 211-8588 (JP)**
• **NAKAGAWA, Akira**
  **Kawasaki-shi, Kanagawa 211-8588 (JP)**
• **KATO, Keizo**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **ESTIMATION PROGRAM, ESTIMATION METHOD, AND INFORMATION PROCESSING DEVICE**

(57) An information processing apparatus inputs input data into a trained variational autoencoder that includes an encoder and a decoder and converts, into a first probability distribution, a probability distribution of a latent variable that is generated by the trained variational autoencoder according to the input, on the basis of a magnitude of a standard deviation output from the encoder. The information processing apparatus converts the first probability distribution into a second probability distribution on the basis of an output error of the decoder regarding the input data. Thereafter, the information processing apparatus outputs the second probability distribution as an estimated value of a probability distribution of the input data.

FIG. 1

**Description**

FIELD

The present invention relates to a probability distribution estimation technology.

BACKGROUND

In data analysis, by using autoencoders or the like, low-dimensional features are extracted from complex multidimensional data, and data analysis is performed using the features. For example, features of an image of a product flowing on a belt conveyor are extracted, and a defective product is detected from among the flowing products.

In recent years, data analysis using a variational autoencoder (VAE) that trains a latent variable as a probability distribution has been used. For example, the VAE includes an encoder and a decoder, and parameters of the encoder and the decoder are machine-learned so as to minimize an expected value of a reconstruction error calculated using an output of the decoder to which the latent variable is input and a normalization error of a probability distribution of a latent variable calculated using an output of the encoder to which the features are input. Anomaly data is detected by inputting a plurality of pieces of detection target data into the VAE that has been trained (trained) in this way.

CITATION LIST

NON-PATENT DOCUMENT

Non-Patent Document 1: Diederik P. Kingma, Max Welling, "Auto-Encoding Variational Bayes", ICLR 2014.

SUMMARY

[TECHNICAL PROBLEM]

However, in the VAE described above, a single-variable-independent normal distribution is assumed, and there is no guarantee that the obtained probability distribution of the latent space reflects a distribution of a real space. Therefore, in a case where determination target data is input to the trained VAE and a probability distribution of the input data is estimated using the output of the encoder so as to detect the anomaly data, it is not possible to guarantee an estimation result, anomaly detection accuracy is not high.

Note that it is also considered that an autoencoder that applies the Rate-Distortion theory for minimizing an information entropy of a latent variable is used. In a case where such an autoencoder is used, the probability distribution of the latent space is substantially the same as the probability distribution of the real space data. However, in a case where a shape of the probability distribution of the real space is complicated, it is needed to express the probability distribution of the latent space designed to be the same as that as a complicated shape, for example, by mixing a plurality of parametric probability distributions. Therefore, cost increases in order to improve accuracy, and this is not realistic.

In one aspect, an object is to provide an estimation program, an estimation method, and an information processing apparatus that can improve accuracy of input data anomaly detection.

[SOLUTION TO PROBLEM]

In a first proposal, an estimation program causes a computer to execute processing for inputting input data into a trained variational autoencoder that includes an encoder and a decoder and converting a probability distribution of a latent variable generated by the trained variational autoencoder according to the input into a first probability distribution on the basis of a magnitude of a standard deviation output from the encoder. The estimation program causes the computer to execute processing for converting the first probability distribution into a second probability distribution on the basis of an output error of the decoder regarding the input data. The estimation program causes the computer to execute processing for outputting the second probability distribution as an estimated value of a probability distribution of the input data.

According to an aspect of the embodiments, an estimation program for causing a computer to execute processing includes inputting input data into a trained variational autoencoder that includes an encoder and a decoder; converting, into a first probability distribution, a probability distribution of a latent variable that is generated by the trained variational autoencoder according to the input on the basis of a magnitude of a standard deviation output from the encoder; converting the first probability distribution into a second probability distribution on the basis of an output error of the decoder regarding the input data; and outputting the second probability distribution as an estimated value of a probability distribution of the input data.

[ADVANTAGEOUS EFFECTS OF INVENTION]

In one aspect, accuracy of input data anomaly detection can be improved.

BRIEF DESCRIPTION OF DRAWINGS

FIG. 1 is a diagram for explaining an information processing apparatus according to a first embodiment;
FIG. 2 is a functional block diagram illustrating a functional configuration of the information processing apparatus according to the first embodiment;
FIG. 3 is a diagram for explaining a configuration of a VAE and machine learning;
FIG. 4 is a diagram for explaining calculation of a probability distribution of input data;
FIG. 5 is a diagram for explaining a correspondence between the input data and each variable;
FIG. 6 is a flowchart illustrating a flow of training processing;
FIG. 7 is a flowchart illustrating a flow of detection processing;
FIG. 8 is a diagram for explaining input data that is artificially generated for verification;
FIG. 9 is a diagram for explaining an anomaly detection result using a reference technique;
FIG. 10 is a diagram for explaining an anomaly detection result using the first embodiment;
FIG. 11 is a diagram for explaining another example of the VAE; and
FIG. 12 is a diagram for explaining a hardware configuration example.

DESCRIPTION OF EMBODIMENTS

Hereinafter, an embodiment of an estimation program, an estimation method, and an information processing apparatus according to the present invention will be described in detail with reference to the drawings. Note that the present invention is not limited by this embodiment. Furthermore, each of the embodiments may be appropriately combined within a range without inconsistency.

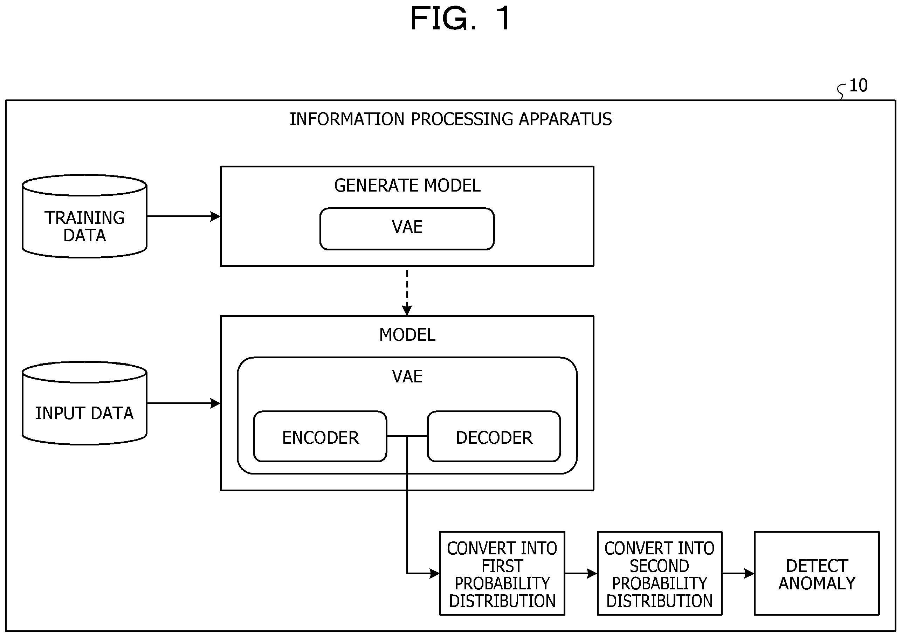

FIG. 1 is a diagram for explaining an information processing apparatus 10 according to a first embodiment. The information processing apparatus 10 illustrated in FIG. 1 inputs input data of a real space into a model generated using a VAE and corrects a prior probability to be substantially the same as a generation probability of the input data using a posterior distribution parameter of a latent variable estimated by an encoder of the VAE. In this way, the information processing apparatus 10 is a computer device that estimates a probability distribution of the input data from the probability distribution of the latent space extracted by the VAE and improves anomaly detection accuracy of the input data.

Specifically, the information processing apparatus 10 performs machine learning of the VAE that includes an encoder and a decoder using training data and generates a model to which the trained VAE is applied. Then, the information processing apparatus 10 inputs input data of the same domain as the training data into an encoder of the model and acquires restored input data from a decoder of the model.

Here, the information processing apparatus 10 converts the probability distribution of the latent variable output from the encoder of the VAE into a first probability distribution on the basis of a magnitude of a standard deviation of an output of the encoder. Moreover, the information processing apparatus 10 converts the first probability distribution into a second probability distribution on the basis of an output error of the decoder of the VAE and outputs the second probability distribution as an estimated value of the probability distribution of the input data.

In this way, the information processing apparatus 10 detects data, having a lower probability, that occupies a specific ratio as anomaly data on the basis of the generated second probability distribution. Furthermore, the information processing apparatus 10 may detect data having a probability equal to or less than a threshold, from among the plurality of pieces of input data, as the anomaly data, on the basis of the second probability distribution.

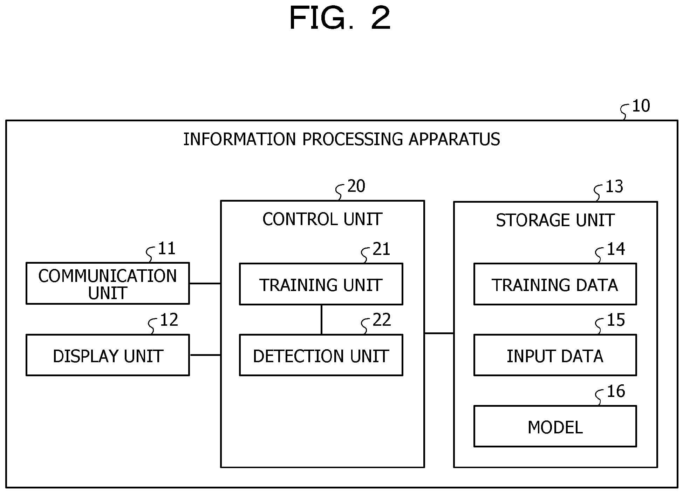

FIG. 2 is a functional block diagram illustrating a functional configuration of the information processing apparatus 10 according to the first embodiment. As illustrated in FIG. 2, the information processing apparatus 10 includes a communication unit 11, a display unit 12, a storage unit 13, and a control unit 20.

The communication unit 11 controls communication with another device. For example, the communication unit 11 receives a machine learning start instruction and various types of data from an administrator's terminal and transmits a result of machine learning, a result of anomaly detection, or the like to the administrator's terminal.

The storage unit 13 stores various types of data, programs executed by the control unit 20, or the like. For example, the storage unit 13 stores training data 14, input data 15, a model 16, or the like.

The training data 14 is training data that is used for machine learning of the VAE and is data belonging to the same domain. For example, in a case where a model that detects a defective product from among products flowing on a belt conveyor is generated, the training data 14 corresponds to image data of the product or the like.

The input data 15 is each piece of data to be input to the generated model and is data to be determined whether or not the data is abnormal. Explaining with reference to the above example, in a case where machine learning of the VAE is performed using the image data of the product as the training data 14, the input data 15 corresponds to an image of the product flowing on the belt conveyor or the like.

The model 16 is a model that is generated by the control unit 20. Specifically, the model 16 is a model to which the VAE that is trained through machine learning using the training data 14 is applied.

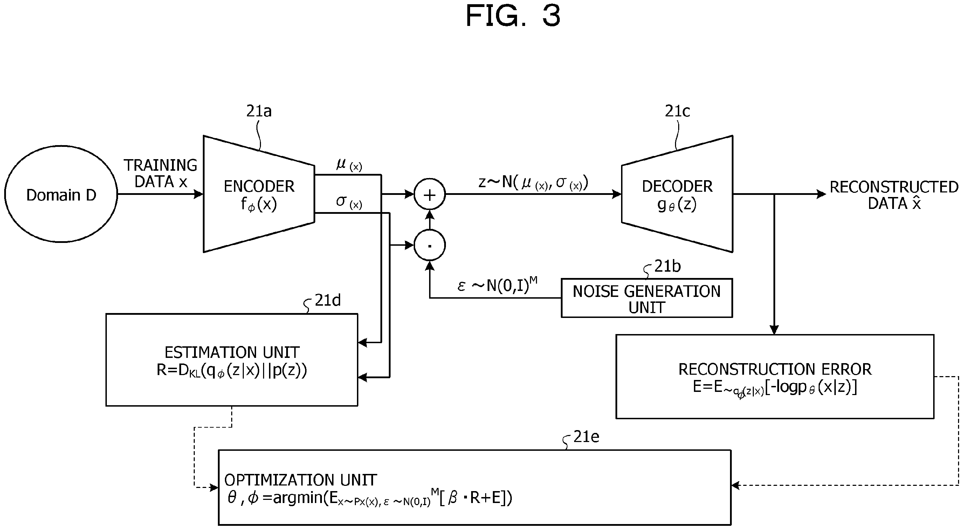

The control unit 20 is a processing unit that controls the entire information processing apparatus 10 and includes a training unit 21 and a detection unit 22. The training unit 21 is a processing unit that performs machine learning of the VAE using the training data 14 and generates the model 16. This training unit 21 generates the model 16 to which the VAE trained through machine learning illustrated in FIG. 3 to be described later and stores the model 16 in the storage unit 13.

FIG. 3 is a diagram for explaining a configuration of the VAE and machine learning. As illustrated in FIG. 3, the VAE includes an encoder 21a ($f_\varphi(x)$), a noise generation unit 21b, a decoder 21c ($g_\varphi(z)$), an estimation unit 21d (R), and an optimization unit 21e ($\theta$, $\varphi$).

Here, machine learning of the VAE will be described. When training data x belonging to a domain D is input, the encoder 21a compresses features of the training data x and outputs a mean $\mu_{(x)}$ and a standard deviation $\sigma_{(x)}$ of an N-dimensional normal distribution. Then, the noise generation unit 21b generates an N-dimensional noise $\varepsilon$ according a mean 0 and a standard deviation I.

By mixing a value obtained by multiplying the noise $\varepsilon$ generated by the noise generation unit 21b by the standard deviation $\sigma_{(x)}$ into the mean $\mu_{(x)}$, a latent variable z to be input to the decoder 21c through sampling is determined from the normal distribution according to the standard deviation $\sigma_{(x)}$ and the mean $\mu_{(x)}$. Then, the decoder 21c generates reconstructed data obtained by decoding the training data x, using the latent variable z corresponding to a feature vector of the training data x.

Thereafter, the estimation unit 21d estimates a normalization error R that is an error between a probability distribution of the latent variable z calculated from the training data x and a prior probability distribution of the latent variable z, using the mean $\mu_{(x)}$ and the standard deviation $\sigma_{(x)}$ output from the encoder 21a. Then, the optimization unit 21e adjusts (machine learning) each parameter of the encoder 21a and each parameter of the decoder 21c so as to minimize the normalization error R estimated by the estimation unit 21d and minimize a reconstruction error that is an error between the training data x and the reconstructed data.

Returning to FIG. 2, the detection unit 22 detects anomaly data from the input data, using the model 16. Specifically, the detection unit 22 converts input data of the domain into a parameter of the probability distribution of the latent variable using the encoder 21a that has trained training data of the domain by the VAE and calculates a generation probability of the input data using the converted parameter. In other words, the detection unit 22 estimates a probability distribution of each piece of the input data in the domain from the probability distribution of the latent variable extracted by the trained VAE and detects anomaly data using an estimation result.

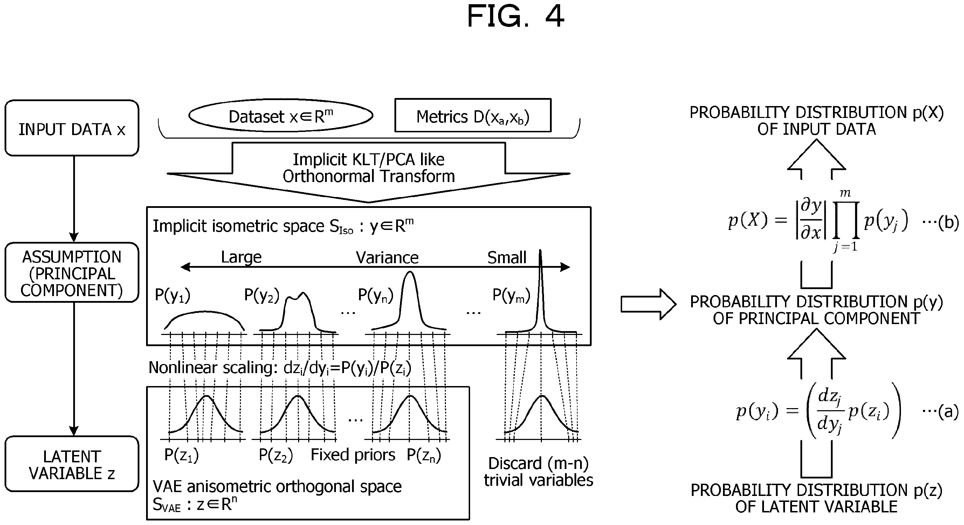

First, the detection unit 22 calculates a probability distribution p(X) of input data (x) from the probability distribution of the latent variable identified by the VAE. FIG. 4 is a diagram for explaining a probability distribution of input data. As illustrated in FIG. 4, both at the time of training and detection, the input data (x) is converted unspecified principal component coordinates y once, and thereafter, it can be assumed that a scale be appropriately changed and the principal component coordinates y be converted into the latent variable z.

Specifically, by performing Karhunen-Loeve expansion (KLT) as orthonormal transformation and principal component analysis (PCA) for the input data (x), a probability distribution ($p(y_m)$) of a principal component with a small variance is generated from a probability distribution ($p(y_1)$) of a principal component with a large variance. Thereafter, it is assumed that the scale be adjusted so as to equalize the variances when the probability distribution corresponding to each variance is converted into a latent variable of a normal distribution. For example, regarding a probability distribution ($p(z_1)$) of the latent variable converted from the probability distribution ($p(y_1)$) of the principal component with the large variance and a probability distribution ($p(z_m)$) of the latent variable converted from the probability distribution ($p(y_m)$) of the principal component with the small variance, the scale is adjusted so that the variances become the same.

According to such an assumption, as illustrated in (a) of FIG. 4, by inversely converting a probability distribution p(z) of the latent variable, a probability distribution p(y) of a principal component can be generated. Then, as illustrated in (b) of FIG. 4, by further inversely converting the probability distribution p(y) of the principal component, the probability distribution p(X) of the input data (x) can be generated.

Moreover, the detection unit 22 corrects a probability density of the latent variable estimated from the input data with the standard deviation output from the encoder 21a of the VAE. In a case where the scale changes at the time when the probability distribution ($p(y)$) of the assumed principal component is converted into the probability distribution ($p(z)$) of the latent variable z, the converted probability density changes in proportion to the scale.

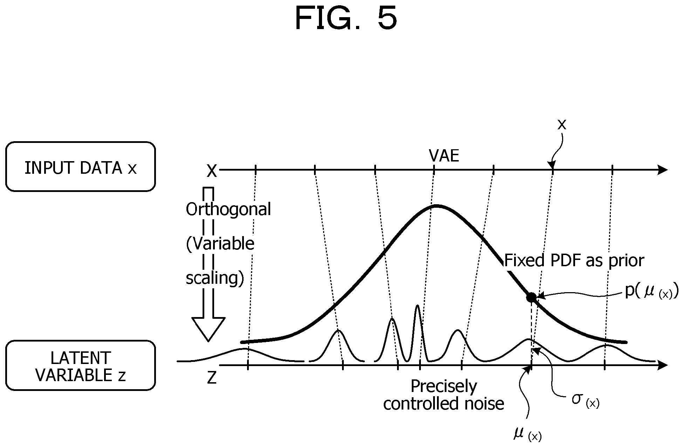

FIG. 5 is a diagram for explaining a correspondence between input data and each variable. FIG. 5 selects and displays one of conversion processes illustrated in FIG. 4 and illustrates conversion from the input data into the probability distribution (p(z)) of the latent variable z. As illustrated in FIG. 5, although the features (mean $\mu_{(x)}$, standard deviation $\sigma_{(x)}$) are generated from the input data (x), a probability distribution ($p(\mu_{(x)})$) in a latent space of the mean $\mu_{(x)}$ of these is associated on the normal distribution, in the conversion process.

On the other hand, since the standard deviation $\sigma_{(x)}$ indicates a magnitude of the noise mixed into data, the standard deviation $\sigma_{(x)}$ indicating the noise changes if the scale changes. That is, when it is assumed that the noise mixed into the input data is known (certain distribution), a change rate of the scale appears in the magnitude of the standard deviation $\sigma_{(x)}$ output from the encoder 21a of the VAE. Therefore, the detection unit 22 defines a conversion scale as in the formula (1), using a coefficient $\beta$ of a normalization term of an optimization equation. As a result of these, the probability distribution p(X) of the input data (x) can be expressed by the formula (2). That is, the probability distribution p(X) is an example of a sampling probability and is a distribution of a generation probability that each piece of the input data (x) follows.

[Math. 1]

$$\left.\frac{dz_j}{dy_j}\right|_{z_j=\mu_{j(x)}} = \sqrt{2/\beta}\,\sigma_{j\,(x)}$$

... Formula (1)

($\beta$: coefficient of normalization term of optimization equation)

[Math. 2]

$$p(X) = \left|\frac{\partial y}{\partial x}\right|\prod_{j=1}^{m}p(y_j) = \left|\frac{\partial y}{\partial x}\right|\prod_{j=1}^{m}\left.\left(\frac{dz_j}{dy_j}p(z_j)\right)\right|_{z_j=\mu_{j(x)}}$$

$$= (2/\beta)^{\frac{m}{2}}(2\pi)^{-\frac{n-m}{2}}\underbrace{|G_x|^{\frac{1}{2}}}_{A}\prod_{j=1}^{n}\underbrace{\left(\sigma_{j\,(x)}\frac{p(\mu_{j(x)})}{N(0,1)}\right)}_{B}$$

... Formula (2)

Note that, although a formula using m principal components is indicated in the formula (2), since an average value of the minus square of the standard deviation $\sigma_{(x)}$ "bar of $\sigma_{(x)}{}^{-2}$" corresponds to a data variance (unique value) in each principal component, an order indicating a variance of which principal component has the larger variance can be specified. Therefore, when compression to a predetermined dimension is performed, a principal component with a higher compression effect can be selected.

Here, an item A in the formula (2) indicates a probability other than the principal component and is a constant value (mean $\mu_{(x)}$ = 0, standard deviation $\sigma_{(x)}$ = 1), and an item B corresponds to a probability of the principal component. That is, in the assumption of the conversion illustrated in FIG. 4, for example, a probability distribution of a principal component having a small variance, such as $p(y_m)$, is treated as a constant because the principal component is not dispersed.

Therefore, as indicated in the formula (3), the probability distribution p(X) of the input data (x) can be expressed as proportional to the scale. Note that an item C in the formula (3) is a scale of the reconstruction error and can be defined by the formula (4) in a case where the normal distribution is assumed for the reconstruction error. That is, the probability distribution p(X) of the input data (x) can be defined with an item D of the formula (3), and the probability distribution of the latent variable can be corrected so as to reflect the generation probability of the input data with $\sigma_{(x)}$ of the latent variable.

[Math. 3]

$$p(X) \propto |G_x|^{\frac{1}{2}} \underbrace{\frac{p(\mu_{(x)})}{N_n(0,I_n)}}_{C} \underbrace{\prod_{j=1}^{n} \sigma_{j\,(x)}}_{D}$$

... Formula (3)

[Math. 4]

$$|G_x| = \left(\frac{1}{2\sigma^2}\right)^m$$

... Formula (4)

Here, processing for calculating the probability distribution of the input data described above will be described in detail. Specifically, similarly to the VAE, a probability distribution $q_\varphi(z \mid x)$ of the latent variable z with respect to input data x of an m-dimensional domain is assumed as an m-dimensional Gaussian distribution N $(\mu_{(x)}, \sigma_{(x)})$, and parameters $\mu_{(x)}$ and o(x) thereof are identified by the encoder 21 $(f_\varphi(x))$. Then, using the latent variable z indicated in the formula (5) sampled from the identified distribution, the reconstructed data is estimated by the decoder 21c $(g_\varphi(z))$ as indicated in the formula (6). Furthermore, the respective parameters of the encoder 21a and the decoder 21c are optimized through machine learning that minimizes the formula (7).

[Math. 5]

$$z = \mu_{(x)} + \sigma_{(x)} \odot \epsilon, \epsilon \sim N(0,I)$$

... Formula (5)

[Math. 6]

$$\text{Reconstructed data } \hat{x} \rightarrow \hat{x} = g_\theta(z)$$

... Formula (6)

[Math. 7]

$$\beta \cdot R + E$$

$$\sim \beta \cdot D_{KL}\big(q_\varphi(z|x)\|p(z)\big) + E_{\sim q_\varphi(z|x)}\big[-\log p_\theta(x|z)\big]$$

... Formula (7)

Thereafter, for the acquired z, the detection unit 22 calculates n (n-dimensional) z that satisfy the formula (8) or the average value of the minus square of the standard deviation $\sigma_{(x)}$ of the output of the encoder 21a regarding the trained input data and extracts n values in a descending order. Then, the detection unit 22 converts the input data (x) of the domain into distribution parameters $(\mu_{(x)}, \sigma_{(x)})$ by the encoder 21a $(f_\varphi(x))$, and estimates a generation probability p(x) of the input data (x) according to the formula (9). That is, the generation probability p(x) is a generation probability for each piece of the input data (x), each piece of the input data (x) can be defined according to the probability distribution p(X) in the formula (2), and as result, the generation probability p(x) of each piece of the input data can be defined by the formula (9). Therefore, one generation probability p(x) is calculated for one piece of the input data, and the probability distribution p(X) is configured by collecting the plurality of generation probabilities p(x).

[Math. 8]

$$\{z_j \in z | D_{KL}\big(q_\varphi(z_j|x)\|p(z_j)\big) \neq 0\}$$

... Formula (8)

[Math. 9]

$$p(x) = \prod_{j=1}^{n} \left( \sigma_{j\,(x)} \frac{p(\mu_{j\,(x)})}{N(0,1)} \right)$$

... Formula (9)

Then, the detection unit 22 detects a certain percentage, for example, 10% of the total, of lower data as the anomaly data, from data of the generation probabilities calculated using the formula (9) for the plurality of pieces of input data 15.

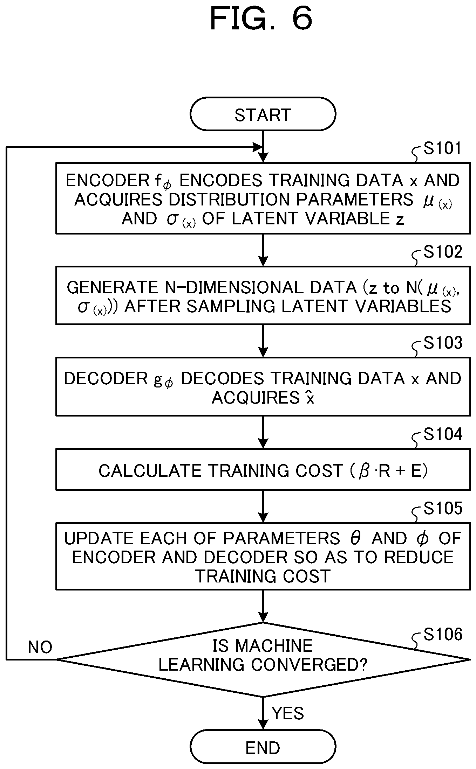

Next, a flow of training processing will be described. Here, the training data 14 will be described as the training data x. FIG. 6 is a flowchart illustrating a flow of the training processing. As illustrated in FIG. 6, the training unit 21 inputs the training data x into the encoder 21a, encodes the training data x by the encoder 21a, and acquires the distribution parameters ($\mu_{(x)}$, $\sigma_{(x)}$) of the latent variable z (S101).

Subsequently, the training unit 21 generates N-dimensional data by sampling a predetermined number of latent variables z (S102). Then, the training unit 21 acquires data obtained by inputting the N-dimensional data into the decoder 21c ($g_{\varphi}(z)$) and decoding the training data x (S103).

Thereafter, the training unit 21 calculates a training cost using the normalization error R estimated by the estimation unit 21d and a reconstruction error E that is an error between the training data x and the reconstructed data (S104) and updates respective parameters ($\theta$, $\varphi$) of the encoder 21a and the decoder 21c so as to minimize the training cost (S105).

Thereafter, in a case where machine learning is not converged (S106: No), S101 and subsequent steps are repeated for a next piece of the training data 14. On the other hand, in a case where machine learning is converged (S106: Yes), the training unit 21 generates the model 16 to which the VAE that has completed machine learning is applied. Note that, in a case where the number of times of training is equal to or more than a threshold or a restoration error is equal to or less than a threshold, the training unit 21 can determine that machine learning is converged.

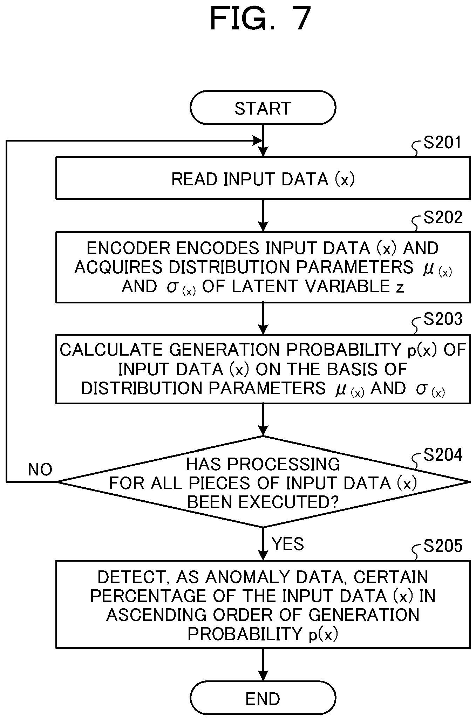

Next, a flow of detection processing will be described. Here, the input data 15 will be described as the input data (x). FIG. 7 is a flowchart illustrating a flowchart of detection processing. As illustrated in FIG. 7, the detection unit 22 reads the input data (x) (S201), inputs the input data (x) into the encoder 21a of the trained VAE, encodes the input data (x), and acquires the distribution parameters ($\mu_{(x)}$, $\sigma_{(x)}$) of the latent variable z (S201).

Subsequently, the detection unit 22 calculates the generation probability p(x) of the input data (x) using the formula (9), on the basis of the acquired distribution parameters ($\mu_{(x)}$, $\sigma_{(x)}$) (S202). Here, in a case where there is unprocessed input data (x) (S204: No), the detection unit 22 repeats S201 and subsequent steps for the next piece of the input data (x).

Then, when completing the processing for all the pieces of the input data (x) (S204: Yes), the detection unit 22 detects a certain percentage of the input data (x), in ascending order of the generation probability p(x), as the anomaly data (S205).

As described above, the information processing apparatus 10 can estimate the probability distribution of the input data, using the standard deviation output from the encoder 21a of the VAE. Therefore, the information processing apparatus 10 can guarantee that the probability distribution of the latent space reflects a distribution of the real space and can perform highly accurate anomaly detection using the output of the encoder 21a of the VAE. Furthermore, in a case where data of a real domain can be latently represented by a single-variable Gaussian distribution in a task using a probability distribution of the real domain, such as anomaly detection, the information processing apparatus 10 can perform input data anomaly detection without using a complicated distribution and reduce a calculation cost. The input data may be, for example, image data or audio data.

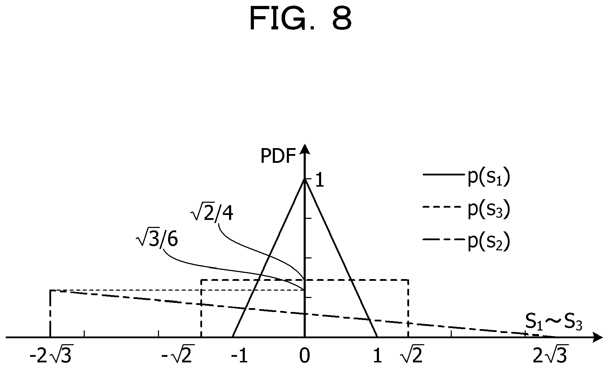

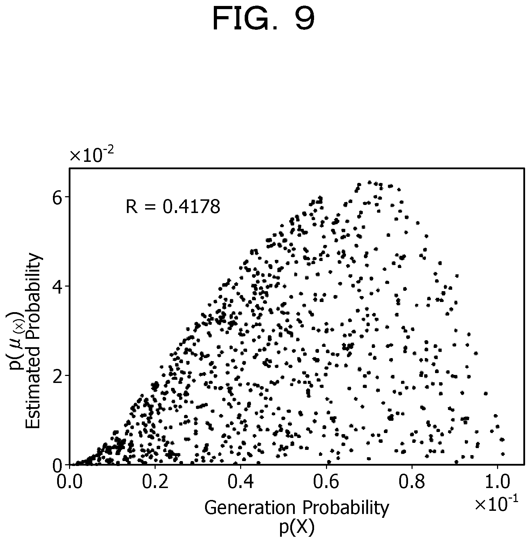

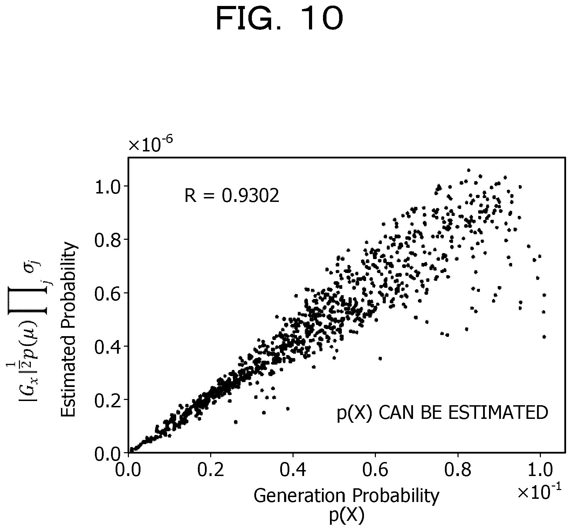

Here, verification using input data that is artificially generated will be described. Here, respective verification results of the first embodiment in which the generation probability p(x) of the input data is estimated according to the formula (8) and the reference technique in which the generation probability ($p(\mu_{(x)})$) of the input data is estimated using the latent space of the VAE will be described. FIG. 8 is a diagram for explaining the input data that is artificially generated for verification, FIG. 9 is a diagram for explaining an anomaly detection result using the reference technique, and FIG. 10 is a diagram for explaining an anomaly detection result using the first embodiment.

As illustrated in FIG. 8, input data is generated using three pieces of data according to a probability density function (PDF). For example, three-dimensional input data is generated in which a variable of which a PDF belongs to $p(S_1)$ to be a range of "0 to 1", a variable of which a PDF belongs to $p(S_2)$ to be "(root 2)/4", and a variable of which a PDF belongs to $p(S_3)$ to be "(root 3)/6 to 0) are multiplied.

Then, a result of estimating the generation probability of the input data using the reference technique, for the plurality of pieces of input data, is illustrated in FIG. 9, and a result of estimating the generation probability of the input data using the first embodiment is illustrated in FIG. 10. The horizontal axis of FIG. 9 indicates the generation probability p(x), the vertical axis indicates an estimated probability ($\rho(\mu_{(x)})$). The horizontal axis of FIG. 10 indicates the generation probability p(x) calculated by the formula (9), and the vertical axis indicates the estimated probability calculated by the formula (3). As illustrated in FIG. 9, with the reference technique, the generation probability of the input data is dispersed, and it is difficult to determine a range detected as abnormal, and anomaly detection accuracy is not high. On the other hand, as illustrated in FIG. 10, with the first embodiment, the generation probability of the input data is linear, and a certain percentage with a low generation probability can be accurately specified and detected as abnormal. Therefore, the anomaly detection accuracy is improved.

Numerical values, data, the number of dimensions, or the like used in the embodiment described above are merely examples and can be arbitrarily changed. Furthermore, a device that performs machine learning of the VAE and a device that performs anomaly detection may be implemented as separate devices.

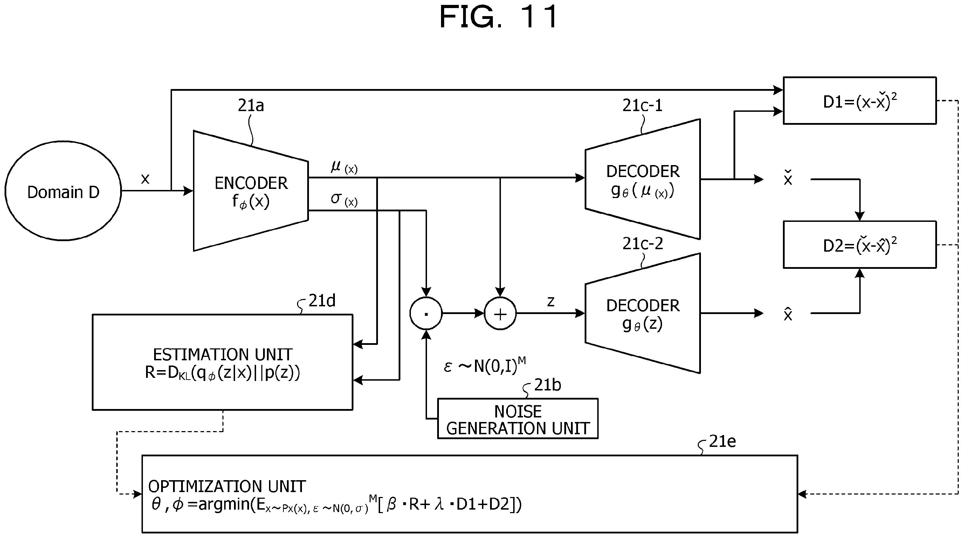

Furthermore, in addition to the configuration illustrated in FIG. 3, the VAE can adopt, for example, a configuration of a VAE that applies the Rate-Distortion theory or the like. FIG. 11 is a diagram for explaining another example of the VAE. As illustrated in FIG. 11, the VAE applying the Rate-Distortion theory includes the encoder 21a, the noise generation unit 21b, a decoder 21c-1, a decoder 21c-2, the estimation unit 21d, and the optimization unit 21e.

When the training data x belonging to the domain D is input, the encoder 21a compresses features of the training data x and outputs the mean $\mu_{(x)}$ and the standard deviation $\sigma_{(x)}$ of the N-dimensional normal distribution. The decoder 21c-1 generates reconstructed data obtained by decoding the input data using the mean $\mu_{(x)}$ output from the encoder 21a. After the noise $\varepsilon$ generated by the noise generation unit 21b is mixed into the standard deviation $\sigma_{(x)}$, the decoder 21c-2 generates the reconstructed data obtained by decoding the input data, using the standard deviation $\sigma_{(x)}$ including the noise $\varepsilon$ and the mean $\mu_{(x)}$.

Thereafter, the estimation unit 21d estimates a normalization error R between a probability distribution of training data (x) and the probability distribution of the latent variable z using the mean $\mu_{(x)}$ and the standard deviation $\sigma_{(x)}$ output from the encoder 21a. Then, the optimization unit 21e adjusts (machine learning) each parameter of the encoder 21a and each decoder so as to minimize the normalization error R estimated by the estimation unit 21d and to minimize a reconstruction error D1 that is an error between the reconstructed data generated by the decoder 21c-1 and the input data and a reconstruction error D2 that is an error between the reconstructed data generated by the decoder 21c-1 and the reconstructed data generated by the decoder 21c-2.

Note that, after machine learning is completed, with a method as in the first embodiment, the probability distribution of the input data can be estimated using the trained VAE.

Pieces of information including a processing procedure, a control procedure, a specific name, various types of data, and parameters described above or illustrated in the drawings may be optionally changed unless otherwise specified.

Furthermore, each component of each device illustrated in the drawings is functionally conceptual, and does not necessarily have to be physically configured as illustrated in the drawings. In other words, specific forms of distribution and integration of individual devices are not limited to those illustrated in the drawings. That is, all or a part thereof may be configured by being functionally or physically distributed or integrated in optional units according to various types of loads, usage situations, or the like.

Moreover, all or an optional part of individual processing functions performed in each device may be realized by a CPU and a program analyzed and executed by the CPU, or may be realized as hardware by wired logic.

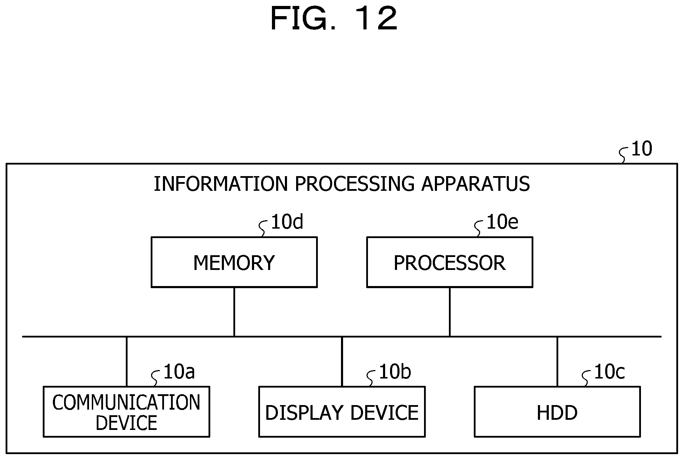

Next, a hardware configuration example of the information processing apparatus 10 will be described. FIG. 12 is a diagram for explaining a hardware configuration example. As illustrated in FIG. 12, the information processing apparatus 10 includes a communication device 10a, a display device 10b, a hard disk drive (HDD) 10c, a memory 10d, and a processor 10e. Furthermore, each of the units illustrated in FIG. 12 is mutually connected by a bus or the like.

The communication device 10a is a network interface card or the like, and communicates with another server. The display device 10b is a device that displays a training result, a detection result, or the like and is, for example, a touch panel, a display, or the like. The HDD 10c stores programs that operate the functions illustrated in FIG. 2 and DBs.

The processor 10e reads a program that executes processing similar to that of each processing unit illustrated in FIG. 2 from the HDD 10c or the like, and develops the read program in the memory 10d, thereby activating a process that executes each function described with reference to FIG. 2 or the like. For example, this process executes a function similar to that of each processing unit included in the information processing apparatus 10. Specifically, the processor 10e reads programs having functions similar to the training unit 21, the detection unit 22, or the like from the HDD 10c or the like. Then, the processor 10e executes a process for executing processing similar to the training unit 21, the detection unit 22, or the like.

In this way, the information processing apparatus 10 operates as an information processing apparatus that executes an estimation method by reading and executing programs. Furthermore, the information processing apparatus 10 may realize functions similar to the functions of the embodiment described above by reading the program described above from a recording medium by a medium reading device and executing the read program described above. Note that the program referred to in another embodiment is not limited to being executed by the information processing apparatus 10. For example, the present invention may be similarly applied to a case where another computer or server executes a program, or a case where such a computer and server cooperatively execute a program.

REFERENCE SIGNS LIST

| | |
|---|---|
| 10 | information processing apparatus |
| 11 | communication unit |
| 12 | display unit |
| 13 | storage unit |
| 14 | training data |
| 15 | input data |
| 16 | model |
| 20 | control unit |
| 21 | training unit |
| 22 | detection unit |

**Claims**

1. An estimation program for causing a computer to execute processing comprising:

   inputting input data into a trained variational autoencoder that includes an encoder and a decoder;
   converting, into a first probability distribution, a probability distribution of a latent variable that is generated by the trained variational autoencoder according to the input on the basis of a magnitude of a standard deviation output from the encoder;
   converting the first probability distribution into a second probability distribution on the basis of an output error of the decoder regarding the input data; and
   outputting the second probability distribution as an estimated value of a probability distribution of the input data.

2. The estimation program according to claim 1, wherein

   the converting processing for converting into the first probability distribution includes
   processing for converting the probability distribution of the latent variable into the first probability distribution according to conversion processing from the latent variable into principal component coordinates, on the basis of the magnitude of the standard deviation.

3. The estimation program according to claim 2, wherein

   the conversion processing includes
   processing for acquiring the standard deviation and a mean that are distribution parameters of the probability distribution of the latent variable from the encoder,
   processing for calculating a change rate of a scale between the principal component coordinates and the latent variable, by using the magnitude of the standard deviation, and
   processing for converting the latent variable into the principal component coordinates by using the standard deviation, the mean, and the change rate.

4. The estimation program according to claim 3, wherein

   the processing for converting into the second probability distribution includes
   processing for setting a probability distribution other than a principal component in the first probability distribution as a constant and converting the first probability distribution into the second probability distribution by using the output error according to a normal distribution to which the scale of the input data is set.

5. The estimation program according to claim 1, for causing the computer to execute processing further comprising:
   detecting data, with a lower probability, that occupies a specific ratio as anomaly data on the basis of the second probability distribution generated from the input data, or data with a probability equal to or less than a threshold as anomaly data, on the basis of the second probability distribution.

6. An estimation method for a computer to execute a process comprising:

inputting input data into a trained variational autoencoder that includes an encoder and a decoder;

converting, into a first probability distribution, a probability distribution of a latent variable that is generated by the trained variational autoencoder according to the input on the basis of a magnitude of a standard deviation output from the encoder;

converting the first probability distribution into a second probability distribution on the basis of an output error of the decoder regarding the input data; and

outputting the second probability distribution as an estimated value of a probability distribution of the input data.

7. An information processing apparatus comprising:

a control unit configured to:

input an input data into a trained variational autoencoder that includes an encoder and a decoder,

convert, into a first probability distribution, a probability distribution of a latent variable that is generated by the trained variational autoencoder according to the input on the basis of a magnitude of a standard deviation output from the encoder,

convert the first probability distribution into a second probability distribution on the basis of an output error of the decoder regarding the input data, and

output the second probability distribution as an estimated value of a probability distribution of the input data.

# FIG. 1

EP 4 134 881 A1

# FIG. 2

INFORMATION PROCESSING APPARATUS 10

CONTROL UNIT 20

COMMUNICATION UNIT 11

DISPLAY UNIT 12

TRAINING UNIT 21

DETECTION UNIT 22

STORAGE UNIT 13

TRAINING DATA 14

INPUT DATA 15

MODEL 16

# FIG. 3

Domain D → TRAINING DATA x → ENCODER $f_\phi(x)$ (21a) → $\mu_{(x)}$, $\sigma_{(x)}$ → (+) → $z \sim N(\mu_{(x)}, \sigma_{(x)})$ → DECODER $g_\theta(z)$ (21c) → RECONSTRUCTED DATA $\hat{x}$

$\varepsilon \sim N(0,I)^M$ ← NOISE GENERATION UNIT (21b)

ESTIMATION UNIT (21d)
$R = D_{KL}(q_\phi(z|x) || p(z))$

RECONSTRUCTION ERROR (21)
$E = E_{\sim q_\phi(z|x)}[-\log p_\theta(x|z)]$

OPTIMIZATION UNIT (21e)
$\theta, \phi = \arg\min(E_{x \sim Px(x), \varepsilon \sim N(0,I)^M}[\beta \cdot R + E])$

EP 4 134 881 A1

# FIG. 4

INPUT DATA x

Dataset $x \in R^m$　　Metrics $D(x_a, x_b)$

Implicit KLT/PCA like Orthonormal Transform

Implicit isometric space $S_{Iso} : y \in R^m$

Large　　　　Variance　　　　Small

$P(y_1)$　$P(y_2)$　...　$P(y_n)$　...　$P(y_m)$

Nonlinear scaling: $dz_i/dy_i = P(y_i)/P(z_i)$

$P(z_1)$　$P(z_2)$　Fixed priors　$P(z_n)$

Discard (m-n) trivial variables

VAE anisometric orthogonal space $S_{VAE} : z \in R^n$

ASSUMPTION (PRINCIPAL COMPONENT)

LATENT VARIABLE z

PROBABILITY DISTRIBUTION p(X) OF INPUT DATA

$$p(X) = \left| \frac{\partial y}{\partial x} \right| \prod_{j=1}^{m} p(y_j) \quad \cdots (b)$$

PROBABILITY DISTRIBUTION p(y) OF PRINCIPAL COMPONENT

$$p(y_i) = \left( \frac{dz_j}{dy_j} p(z_i) \right) \quad \cdots (a)$$

PROBABILITY DISTRIBUTION p(z) OF LATENT VARIABLE

EP 4 134 881 A1

# FIG. 5

# FIG. 6

```
                    ┌──────────────┐
                    │    START     │
                    └──────────────┘
                           │
                           ▼                          ⌐S101
┌──────────────────────────────────────────────────┐
│ ENCODER f_φ ENCODES TRAINING DATA x AND            │
│ ACQUIRES DISTRIBUTION PARAMETERS μ_(x)             │
│ AND σ_(x) OF LATENT VARIABLE z                     │
└──────────────────────────────────────────────────┘
                           │
                           ▼                          ⌐S102
┌──────────────────────────────────────────────────┐
│ GENERATE N-DIMENSIONAL DATA (z to N( μ_(x),        │
│ σ_(x))) AFTER SAMPLING LATENT VARIABLES            │
└──────────────────────────────────────────────────┘
                           │
                           ▼                          ⌐S103
┌──────────────────────────────────────────────────┐
│ DECODER g_φ DECODES TRAINING DATA x AND            │
│ ACQUIRES x̂                                         │
└──────────────────────────────────────────────────┘
                           │
                           ▼                          ⌐S104
┌──────────────────────────────────────────────────┐
│ CALCULATE TRAINING COST ( β ·R + E)                │
└──────────────────────────────────────────────────┘
                           │
                           ▼                          ⌐S105
┌──────────────────────────────────────────────────┐
│ UPDATE EACH OF PARAMETERS θ AND φ OF               │
│ ENCODER AND DECODER SO AS TO REDUCE                │
│ TRAINING COST                                      │
└──────────────────────────────────────────────────┘
                           │
                           ▼                          ⌐S106
         NO      ◇ IS MACHINE LEARNING CONVERGED? ◇
                           │ YES
                           ▼
                    ┌──────────────┐
                    │     END      │
                    └──────────────┘
```

# FIG. 7

START

S201

READ INPUT DATA (x)

S202

ENCODER ENCODES INPUT DATA (x) AND
ACQUIRES DISTRIBUTION PARAMETERS $\mu_{(x)}$
AND $\sigma_{(x)}$ OF LATENT VARIABLE z

S203

CALCULATE GENERATION PROBABILITY p(x) OF
INPUT DATA (x) ON THE BASIS OF
DISTRIBUTION PARAMETERS $\mu_{(x)}$ AND $\sigma_{(x)}$

S204

NO — HAS PROCESSING
FOR ALL PIECES OF INPUT DATA (x)
BEEN EXECUTED?

YES

S205

DETECT, AS ANOMALY DATA, CERTAIN
PERCENTAGE OF THE INPUT DATA (x) IN
ASCENDING ORDER OF GENERATION
PROBABILITY p(x)

END

# FIG. 8

# FIG. 9

# FIG. 10

# FIG. 11

ENCODER $f_\phi(x)$   21a

Domain D

$\mu_{(x)}$

$\sigma_{(x)}$

DECODER $g_\theta(\mu_{(x)})$   21c-1

DECODER $g_\theta(z)$   21c-2

$D1=(x-\check{x})^2$

$D2=(\check{x}-\hat{x})^2$

$\check{x}$

$\hat{x}$

ESTIMATION UNIT
$R=D_{KL}(q_\phi(z|x)||p(z))$   21d

$\varepsilon \sim N(0,I)^M$

NOISE GENERATION UNIT   21b

OPTIMIZATION UNIT
$\theta,\phi=\mathrm{argmin}(E_{x\sim Px(x),\ \varepsilon\sim N(0,\sigma)}{}^M[\beta \cdot R+\lambda \cdot D1+D2])$   21e

z

# FIG. 12

INFORMATION PROCESSING APPARATUS ⌇10

MEMORY ⌇10d

PROCESSOR ⌇10e

COMMUNICATION DEVICE ⌇10a

DISPLAY DEVICE ⌇10b

HDD ⌇10c

## INTERNATIONAL SEARCH REPORT

International application No.

PCT/JP2020/016212

### A.  CLASSIFICATION OF SUBJECT MATTER
Int. Cl. G06N20/00(2019.01)i
FI: G06N20/00

According to International Patent Classification (IPC) or to both national classification and IPC

### B.  FIELDS SEARCHED

Minimum documentation searched (classification system followed by classification symbols)
Int. Cl. G06N20/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X<br>Y<br>A | KATO, Keizo et al. Rate-Distortion Optimization Guided Autoencoder for Isometric Embedding in Euclidean Latent Space. [online], v2, arXiv, 03 March 2020, [retrieved on 20 August 2020], Internet: <URL: https://arxiv.org/pdf/1910.04329v2.pdf> in particular, 4. Method and Theoretical Properties | 1, 6-7<br>5<br>2-4 |

☒  Further documents are listed in the continuation of Box C.　　☐  See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 20.08.2020 | 01.09.2020 |

| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |
|---|---|

Form PCT/ISA/210 (second sheet) (January 2015)

**INTERNATIONAL SEARCH REPORT**

| | International application No. |
|---|---|
| | PCT/JP2020/016212 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | 上原雅俊ほか．生成モデルを利用したX線写真に対する異常検知の試行と考察．第2回JAMI&JSAI-AIM合同研究会．[online], 09 November 2016 [retrieved on 20 August 2020], Internet: <URL:https://jsai.ixsq.nii.ac.jp/ej/index.php?action=pages_view_main&active_action=repository_action_common_download&item_id=1347&item_no=1&attribute_id=1&file_no=1&page_id=13&block_id=23>, in particular, 3.2 Anomaly Detection Using VAE, (UEHARA, Masatoshi et al. A study of chest X-ray image anomaly detection with deep generative models), non-official translation (2nd JAMI & JSAI-AIM Joint Study Group.) | 5<br>2-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIEDERIK P. KINGMA ; MAX WELLING.** Auto-Encoding Variational Bayes. *ICLR,* 2014